# EUROPÄISCHE PATENTSCHRIFT

(11) **EP 2 258 966 B1**
(45) Veröffentlichungstag und Bekanntmachung des Hinweises auf die Patenterteilung: **14.03.2012**
(21) Anmeldenummer: 10162654.7
(22) Anmeldetag: 12.05.2010
(51) Int. Cl.: F16H 3/72, F16H 37/08, F16H 47/04, F16H 47/00, B60K 6/442, B60K 6/445, B60K 6/365

(54) **Überlagerungsgetriebe**
Summing drive
Boîte de vitesse à combinaison de Puissances

(30) Priorität: 04.06.2009 AT 3452009 U
(43) Veröffentlichungstag der Anmeldung: 08.12.2010
(73) Patentinhaber: Stöckl, Dieter, 4400 St. Ulrich (AT); Aitzetmüller, Heinz, 4817 St. Konrad (AT)
(72) Erfinder: Stöckl, Dieter, 4400 St. Ulrich (AT); Aitzetmüller, Heinz, 4817 St. Konrad (AT)
(74) Vertreter: Staudt, Armin Walter

(56) Entgegenhaltungen:
- US-A- 3 855 879
- US-A- 3 979 972
- US-A- 4 373 359
- US-A- 5 643 122
- US-A1- 2008 214 351
- US-B1- 6 315 691

## Beschreibung

Die vorliegende Erfindung betrifft ein Überlagerungsgetriebe mit hydrostatisch-mechanischer oder elektrisch-mechanischer Leistungsverzweigung für den Einsatz in Räder aufweisenden Fahrzeugen und Arbeitsmaschinen. wie Kommunalfahrzeuge, Handlinggeräten wie Telehandler oder Gabelstapler, Radlader, Traktoren und vergleichbare Vorrichtungen, in welchen eine stufenlose Anpassung der Getriebeübersetzung unabhängig von der Drehzahl des Antriebsmotors gewünscht ist, mit einer Brennkraftmaschine, die eine Eingangswelle eines Überlagerungsgetriebes antreibt, wobei das Überlagerungsgetriebe eine Steuerungseinrichtung in der Form eines Variators aufweist, mit dem die Drehrichtung einer Abtriebswelle zu den Rädern veränderbar und mit dem die Drehzahl der Abtriebswelle stufenlos beeinflussbar ist.

### Stand der Technik

Aus der US 3,979,972 ist ein hydromechanisches Getriebe nach Art eines Leistungsverzweigungsgetriebes bekannt, welches eine mit einer Brennkraftmaschine verbundene Eingangswelle und eine Ausgangswelle umfasst. Dabei sind in einem ersten Zweig zwischen Eingangswelle und Ausgangswelle Kupplungen und Planetengetriebe vorgesehen, wogegen in einem zweiten Zweig ein hydrostatischer Antrieb arbeitet, der mit Stirnradgetrieben in Wirkverbindung steht und zwei hintereinander liegende Hydrostateinheiten aufweist.

Aus der DE 199 54 894 ist ein Leistungsverzweigungsgetriebe bekannt, welches für Traktoren, rad- und kettengetriebene Arbeitsmaschinen und Nutzkraftwagen geeignet ist. Das hierin offenbarte Leistungsverzweigungsgetriebe besitzt einen mechanischen Zweig, einen hydrostatischen Zweig und ein oder mehrere Planetengetriebe, über die der mechanische Leistungsanteil und der hydrostatische Leistungsanteil wieder zusammengeführt werden.

In der DE 101 28 853 wird ein Kraftfahrzeug beschrieben, welches einen Antriebsstrang mit einer Antriebseinheit, ein Getriebe und eine Kupplungseinrichtung zur Momentübertragung zwischen der Antriebseinheit und dem Getriebe aufweist. Die Kupplungseinrichtung ist als Mehrfach-Kupplungseinrichtung, insbesondere Doppelkupplungseinrichtung, mit einer der ersten Getriebeeingangswelle zugeordneten ersten Kupplungsanordnung und einer der zweiten Getriebeeingangswelle zugeordneten zweiten Kupplungsanordnung ausgeführt.

Die US 3,918,325 beschreibt ein leistungsverzweigtes Getriebe mit einer Antriebswelle, einem ersten Planetengetriebe für Langsamlauf, einem zweiten Planetengetriebe für Schnelllauf und einer mit einem gemeinsamen Planetenträger verbundenen Abtriebswelle. Weiters ist ein stufenlos steuerbarer hydraulischer Getriebezweig mit zwei als Pumpe und Motor arbeitenden hydraulischen Einheiten vorgesehen, von denen eine auf eine Abtriebswelle wirkt.

Alle diese genannten Systeme weisen jedoch eine Reihe von Nachteilen auf. So ist ihr Getriebeaufbau kompliziert und daher mit erheblichen Herstellungskosten behaftet. In den Hauptbetriebsbereichen des Motors und insbesondere bei hohen Geschwindigkeiten sind teils erhebliche Wirkungsgradverluste unvermeidbar.

Um diese Nachteile zu umgehen, beschreibt die EP 2034221 ein Triebwerk für ein Kraftfahrzeug, insbesondere für ein Motorrad, bei dem durch die Kombination einer Hydrostateinrichtung und eines Summierplanetengetriebes eine gesonderte Rückwärtsgangeinrichtung entfallen kann. Nachteilig bei dieser Ausführung ist, dass die Umschaltung vom rein hydrostatischen Antrieb zum Leistungsverzweigungsgetriebe immer über eine schleifende Kupplung erfolgen muss.

Die US 3855879 zeigt die Merkmale des Oberbegriffes des Anspruchs 1.

### Aufgabenstellung

Die vorliegende Erfindung stellt sich daher die Aufgabe, die genannten Mängel der bekannten Einrichtungen weitgehend zu vermeiden und einen einfachen, in seiner Herstellung kostengünstigen Getriebeaufbau zu ermöglichen. Weiters soll eine stufenlose Anpassung der Getriebeübersetzung unabhängig von der Drehzahl des Antriebsmotors ermöglicht werden, ohne dass es zu spürbaren Wirkungsgradverlusten kommt.

Diese Aufgaben werden ausgehend von einem Getriebe der eingangs genanten Gattung erfindungsgemäß dadurch gelöst, dass die Eingangswelle des Überlagerungsgetriebes über eine Stirnradstufe mit der Eingangswelle des Variators, umfassend eine eine Variatorabtriebswelle aufweisende Verstelleinrichtung, verbunden ist, dass die Variatorabtriebswelle entweder über eine Stirnradstufe oder direkt mit Sonnenrädern von parallel zueinander angeordneten Summierplanetengetrieben verbunden ist, dass der Abtrieb in allen Fahrgeschwindigkeiten und allen Fahrbereichen über mindestens einen als Planetenträger für alle Planetenräder ausgebildeten Steg erfolgt, welcher fest mit der Abtriebswelle des Überlagerungsgetriebes verbunden ist.

Das erfindungsgemäße Getriebe basiert auf dem Prinzip der Leistungsverzweigung, wobei alle Variatorsysteme geeignet sind, in welchen eine Veränderung der Abtriebsdrehzahl der Variatoreinheit in beiden Drehrichtungen möglich ist, also sowohl hydrostatische Variatoren mit Verstellpumpe und Konstantmotor oder mit Verstellpumpe und Verstellmotor, wobei der Verstellmotor in der Form von Axialkolbenmaschinen oder Flügelzelleneinheiten ausgebildet sein kann, als auch elektrische Variatoren als Kombination eines Generators mit einem E-Motor, eventuell auch unter Einbeziehung von elektrischen Speichersystemen.

In weiterer Folge und insbesondere in den Figuren sind zur Vereinfachung lediglich hydrostatische Variatoreinheiten dargestellt und beschrieben, die Erfindung gilt aber ausdrücklich auch für analoge Ausführungen mit geeigneten alternativen Variatoren.

### Ausführungsbeispiel

Die Erfindung wird nachstehend anhand der Figuren näher erläutert. Darin zeigt:
- **Fig. 1**: ein Getriebe mit einem zweireihigen Summierplanetensatz, einer Hydraulik- einheit und eine Kupplung zum Umschalten im Synchronlauf vom rein hyd- rostatischen Abtrieb in einen leistungsverzweigten Abtrieb für Vorwärtsfahrt;
- **Fig. 2**: ein Getriebe nach Fig. 1 mit einem Vorwärts- und einem Rückwärtsgang;
- **Fig. 3**: ein Getriebe nach Fig. 2 mit zwei Vorwärtsgängen, wobei der zweite Vor- wärtsgang über eine schleifende Kupplung geschaltet wird;
- **Fig. 4**: ein Getriebe nach Fig. 1 in gestreckter Bauweise;
- **Fig. 5**: ein Getriebe nach Fig. 2 in gestreckter Bauweise;
- **Fig. 6**: ein Getriebe mit einem Variator in kompakter Bauweise mit parallel liegen- der Hydropumpe und Hydromotor in Z-Form;
- **Fig. 7**: ein Getriebe nach Fig. 3 mit einem Variator aus getrennten Einheiten;
- **Fig. 8**: ein Diagramm mit den Drehzahlverhältnissen in einem Getriebe nach Fig. 1 oder 4;
- **Fig. 9**: ein Diagramm mit den Drehzahlverhältnissen in einem Getriebe nach Fig. 3;
- **Fig. 10**: ein Getriebe nach Fig. 3, wobei ein erstes Hohlrad über zwei Stirnradstu- fen und zwei Kupplungen und ein zweites Hohlrad über eine Stirnradstufe und eine Kupplung mit der Getriebeeinganswelle verbunden werden und die Umschaltung von einem Gang in den angrenzenden Gang jeweils bei Synchrondrehzahl erfolgt;
- **Fig. 11**: ein Getriebe nach Fig. 1, wobei die Lage des Umkehrplanetensatzes und des direkten Planetensatzes vertauscht sind, wodurch der hydrostatische Antrieb über den direkten Planetensatz und der leistungsverzweigte Antrieb über den Umkehrplanetensatz dargestellt werden;
- **Fig. 12**: ein Getriebe nach Fig. 11 mit einem Vorwärts- und einem Rückwärtsgang;
- **Fig. 13**: ein Getriebe nach Fig. 11 mit zwei Vorwärts- und einem Rückwärtsgang, wobei der zweite Vorwärtsgang über eine schleifende Kupplung geschaltet wird;
- **Fig. 14**: ein Getriebe nach Fig. 11 in gestreckter Bauweise;
- **Fig. 15**: ein Getriebe nach Fig. 12 in gestreckter Bauweise;
- **Fig. 16**: ein Getriebe nach Fig. 13 mit einem Variator in kompakter Bauweise mit parallel liegender Hydropumpe und Hydromotor in Z-Form;
- **Fig. 17**: ein Getriebe nah Fig. 13 mit einem Variator aus getrennten Einheiten;
- **Fig. 18**: ein Diagramm mit den Drehzahlverhältnissen in einem Getriebe nach den Fig. 11 und 14;
- **Fig. 19**: ein Diagramm mit den Drehzahlverhältnissen in einem Getriebe nach Fig. 13;
- **Fig. 20**: ein Getriebe nach Fig. 13, bei dem ein erstes Hohlrad über zwei Stirnrad- stufen und zwei Kupplungen und ein zweites Hohlrad über eine Stirnradstu- fe und eine Kupplung mit der Getriebeeingangswelle verbunden sind und die Umschaltung von einem Gang in einen angrenzenden Gang jeweils bei Synchrondrehzahl erfolgt;
- **Fig. 21**: ein Getriebe nach Fig. 20, bei dem je zwei leistungsverzweigte Bereiche für Vorwärtsfahrt und für Rückwärtsfahrt vorgesehen sind und alle Umschal- tungen bei Synchrondrehzahl erfolgen;
- **Fig. 22**: ein Diagramm mit den Drehzahlverhältnissen in einem Getriebe nach Fig. 20.

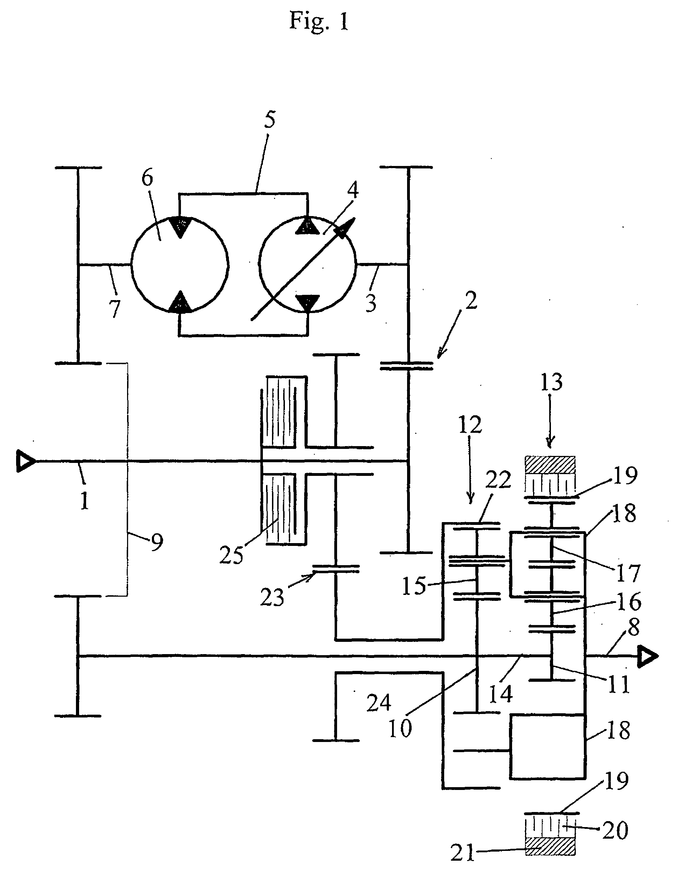

Gemäß **Fig. 1** treibt die Getriebeeingangswelle 1 über eine Stirnradstufe 2 und über die Welle 3 eine Verstellpumpe 4 eines Variatorsystems 5. Durch den von der Verstellpumpe 4 geförderten Ölstrom wird ein Hydromotor 6 angetrieben. Das aus Verstellpumpe 4 und Hydromotor 6 bestehende Variatorsystem 5 dient der stufenlosen Steuerung und ermöglicht bei geringen Geschwindigkeiten auch ein Rückwärtsfahren ohne hierfür einen mechanischen Rückwärtsgang zu erfordern. Das Variatorsystem 5 als Steuereinrichtung verändert beim Anfahren des Fahrzeuges einerseits die Drehrichtung der Variatorabtriebswelle 7 für Vorwärts- oder Rückwärtsfahrt, andererseits lässt sich mit dem Variatorsystem 5 beim Anfahrvorgang bis zu einer ersten Höchstgeschwindigkeit die Abtriebswelle 8 stufenlos verstellen. Die Variatorabtriebswelle 7 ist entweder direkt oder über eine Stirnradstufe 9 mit den Sonnenrädern 10 und 11 zweier zueinander parallel angeordneter Summierplanetengetriebe 12 und 13 gekoppelt. Die beiden Sonnenräder 10 und 11 sind über die Welle 14 miteinander drehfest verbunden. Die Planetenräder 15 des Summierplanetengetriebes 12 und die Planetenräder 16 und 17 des Summierplanetengetriebes 13 sind in einem gemeinsamen als Steg 18 ausgebildeten Planetenträger drehbar gelagert.

Bei den in den **Figuren 1 bis 7** **und** **10** gezeigten Getriebeausführungen kämmt im Summierplanetengetriebe 12 das Sonnenrad 10 mit den Planetenrädern 15, welche wiederum mit dem Hohlrad 22 im Zahneingriff stehen. Das Hohlrad 22 ist über die Hohlwelle 24 mit der Stirnradstufe 23 verbunden, welche zur Kupplung 25 führt. Im Summierplanetensatz 13 kämmt das Sonnenrad 11 mit einem relativ kleinen Durchmesser mit den Planetenrädern 16, welche ihrerseits mit den Planetenrädern 17 kämmen, wobei die Planetenräder 17 mit dem Hohlrad 19 im Zahneingriff stehen.

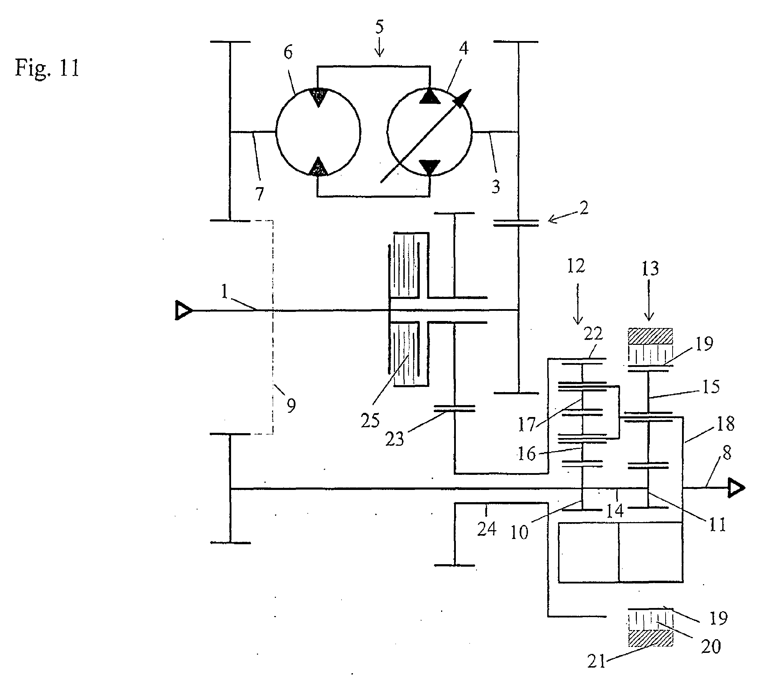

Bei den in den **Figuren 11 bis 20** **und** **21** gezeigten Getriebeausführungen kämmt im Summierplanetengetriebe 12 das Sonnenrad 10 mit den Planetenrädern 16, welche ihrerseits mit den Planetenrädern 17 kämmen, welche wiederum mit dem Hohlrad 22 im Zahneingriff stehen. Das Hohlrad 22 ist über die Hohlwelle 24 mit der Stirnradstufe 23 verbunden, welche zur Kupplung 25 führt. Im Summierplanetensatz 13 kämmt das Sonnenrad 11 mit den Planetenrädern 15, welche mit dem Hohlrad 19 in Zahneingriff stehen.

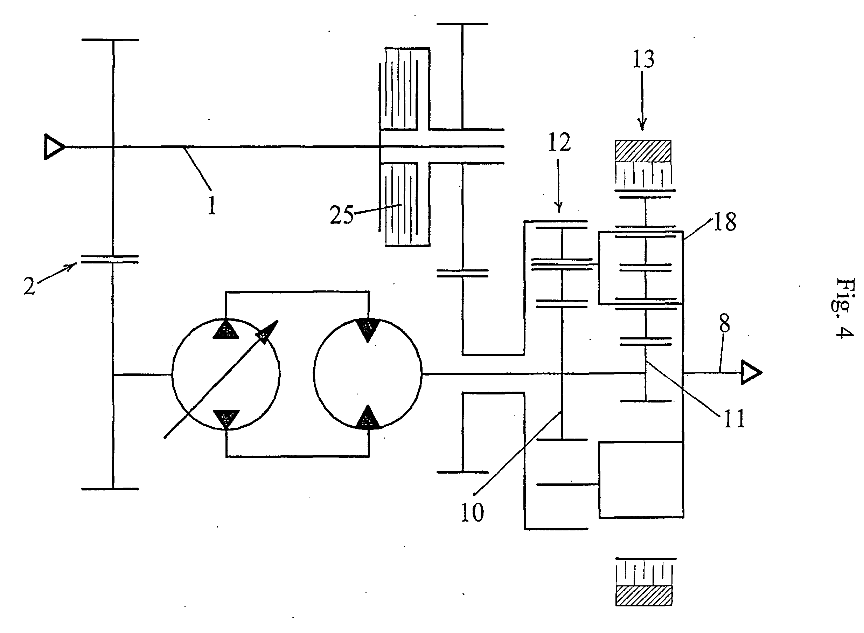

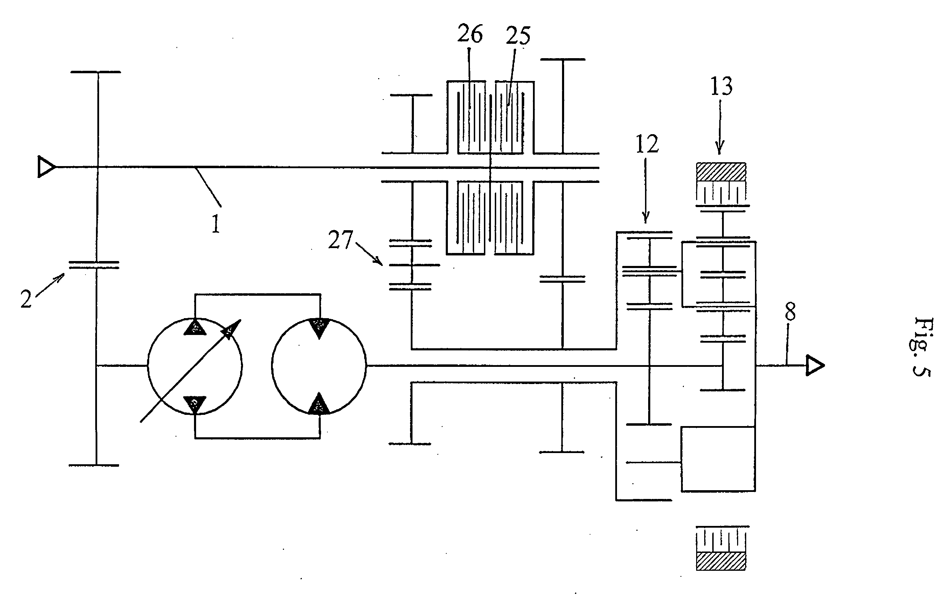

Während des Anfahrens ist das Hohlrad 19 des Summierplanetengetriebes 13 über die Kupplung bzw. Bremse 20 mit dem Gehäuse 21 drehfest verbunden. Aufgrund der gewählten Übersetzungsverhältnisse wird dabei eine hohe Zugkraft erzielt. Der Abtrieb erfolgt von der Variatorabtriebswelle 7 entweder über die Stirnradstufe 9, wie in den **Figuren 1****,** **2** **und** **3** dargestellt, oder direkt - wie in den **Figuren 4 und 5** dargestellt - auf das Sonnenrad 11, welches das Antriebsmoment auf den Steg 18 und somit auf die Abtriebswelle 8 überträgt. Die Kupplung 20 ist dabei geschlossen, das Hohlrad 19 dreht sich nicht.

Die Drehzahl der Abtriebswelle 8 ist über das Übersetzungsverhältnis in Planetensatz 13 mit der Drehzahl der Variatorabtriebswelle 7 gekoppelt und kann in beide Fahrtrichtungen im Rahmen der Drehzahlgrenzen des Variators stufenlos variiert werden.

Mit zunehmender Verstellung der Verstellpumpe 4 nimmt beim Vorwärtsfahren die Drehzahl von Sonnenrad 10 und damit von Hohlrad 22 zu bis der Synchronpunkt in Kupplung 25 erreicht ist. In diesem Betriebszustand befindet sich der Variator in der Nähe der maximalen Drehzahl in einer Richtung.

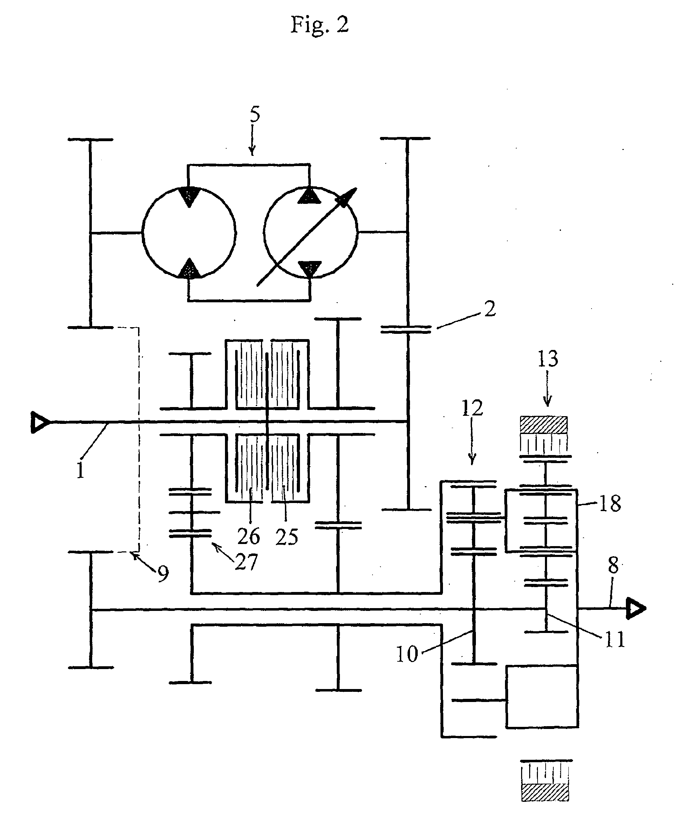

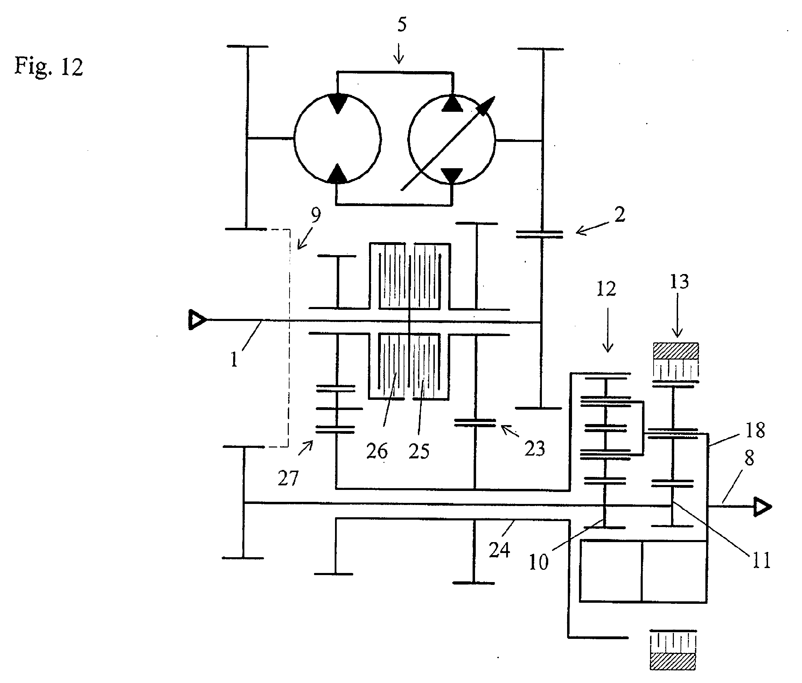

Analog dazu nimmt in den **Figuren 2** **und** **12** mit zunehmender Verstellung der Verstellpumpe 4 beim Rückwärtsfahren die Drehzahl von Sonnenrad 10 und damit von Hohlrad 22 zu bis der Synchronpunkt in Kupplung 26 erreicht ist. Die Drehrichtungsumkehr erfolgt über die Stirnradstufe 27. In diesem Betriebszustand befindet sich der Variator ebenfalls in der Nähe der maximalen Drehzahl in einer Richtung.

Wie in den **Figuren 1 bis 7** **und** **10** gezeigt, bewirkt die Verwendung der Umkehrplanetenräder 16 und 17, dass die Drehrichtung des Hohlrades 22 bei fixiertem Hohlrad 19 entgegen der Drehrichtung der Sonnenräder 10 bzw. 11 gerichtet ist. Bei den in den **Figuren 11 bis 20** **und** **21** gezeigten Ausführungsvarianten ist die Drehrichtung der Hohlrades 22 bei fixiertem Hohlrad 19 gleichgerichtet der Drehrichtung der Sonnenräder 10 und 11. In allen Fällen wird an der Kupplung 25 bei ausreichend hoher Drehzahl an den Sonnenrädern 10 bzw. 11 Synchrondrehzahl erreicht.

Beim Erreichen der Synchrondrehzahl an der Kupplung 25 wird diese überlappend zur Kupplung 20 geschlossen und danach Kupplung 20 geöffnet, womit das Hohlrad 19 sich zu drehen beginnt. In diesem Betriebszustand befindet sich der Variator in der Nähe der maximalen Drehzahl in einer Richtung. Das Hohlrad 22 ist nun über die Stirnradstufe 23 und über die Kupplung 25 mit der Getriebeeingangswelle 1 gekoppelt und wird somit mechanisch angetrieben. Nach dem Schließen der Kupplung 25 wird die Drehzahl an der Variatorabtriebswelle 7 wiederum reduziert und zur weiteren Erhöhung der Drehzahl der Abtriebswelle 8 in die entgegengesetzte Richtung beschleunigt. Bei Erreichen der maximalen Drehzahl von Sonnenrad 10 wird in diesem leistungsverzweigten Bereich die maximale Abtriebsdrehzahl erreicht. Der Abtrieb erfolgt dabei immer über den Steg 18 zur Abtriebswelle 8.

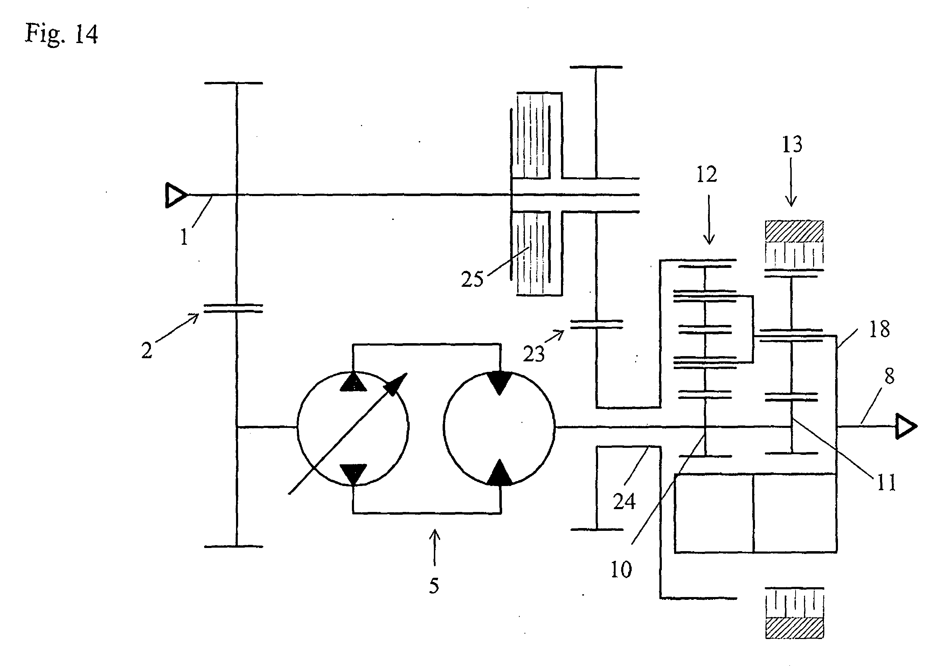

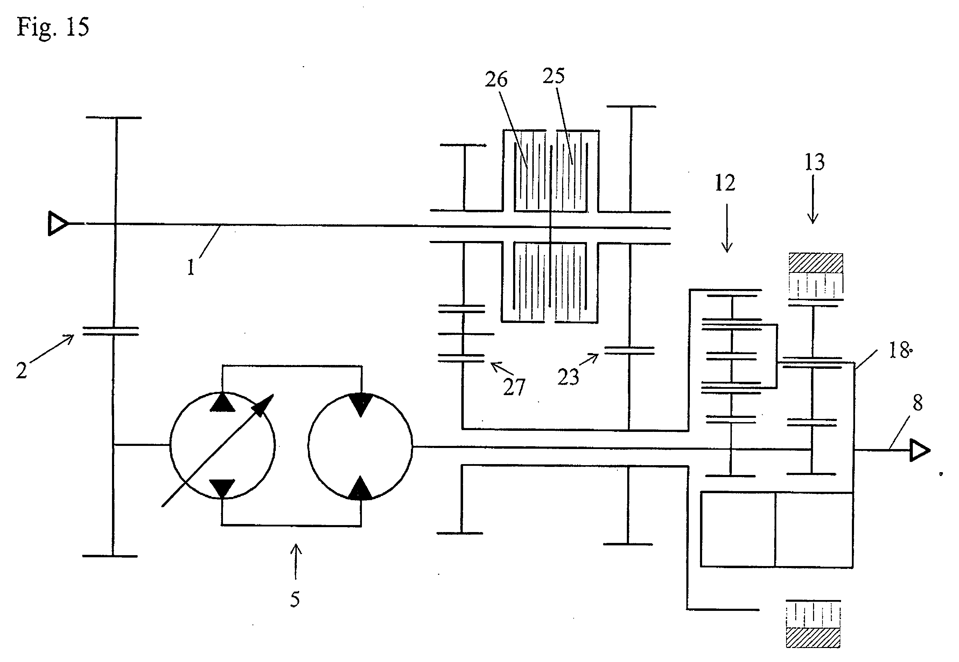

Die Funktionalität dieses direkt an den reinen Variatorantrieb angrenzenden Ganges ist sowohl bei Getriebeausführungen mit einem Vorwärtsgang, wie in den **Figuren 1 und 11** und in den **Figuren 4** **und** **14**, als auch bei Getrieben mit einem Vorwärtsgang und einem Rückwärtsgang, wie in den **Figuren 2** **und** **12** und in **Figuren 5** **und** **15** dargestellt, gut verwendbar. Ob im konkreten Anwendungsfall eine kurze Bauweise, wie in den **Figuren 1****,** **2****,** **3****,** **11****,** **12** **und** **13** dargestellt, oder eine lange Bauweise, wie in den **Figuren 4****,** **5****,** **14** **und** **15** dargestellt verwendet wird, ist lediglich davon abhängig, wie viel Bauraum für den konkreten Anwendungsfall zur Verfügung steht. Aufgrund der sehr einfachen und kompakten Konstruktion des erfindungsgemäßen Getriebes sind hier viele Variationen denkbar.

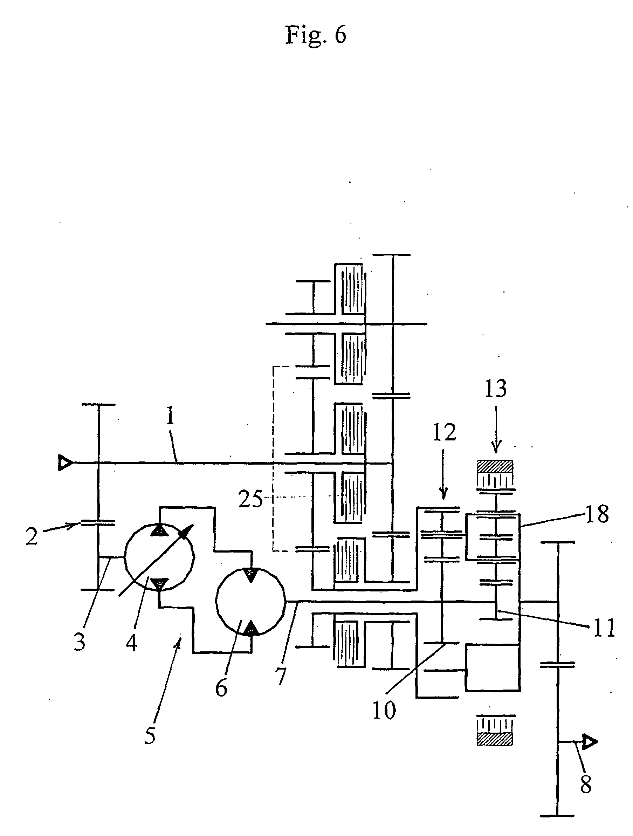

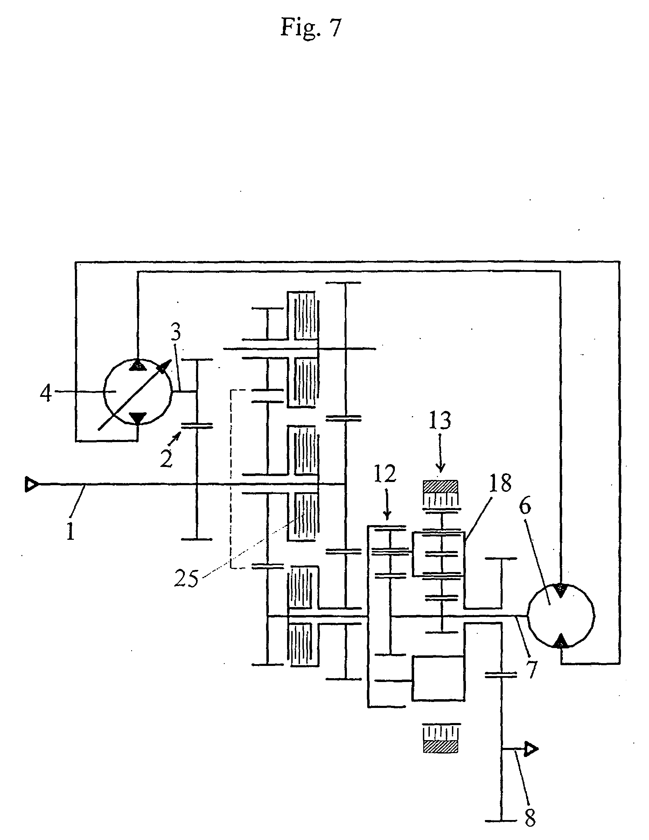

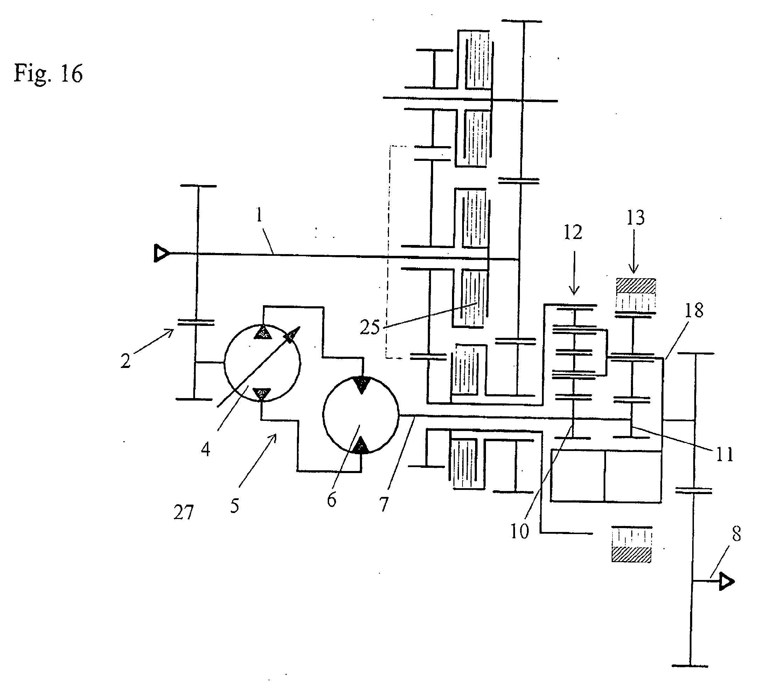

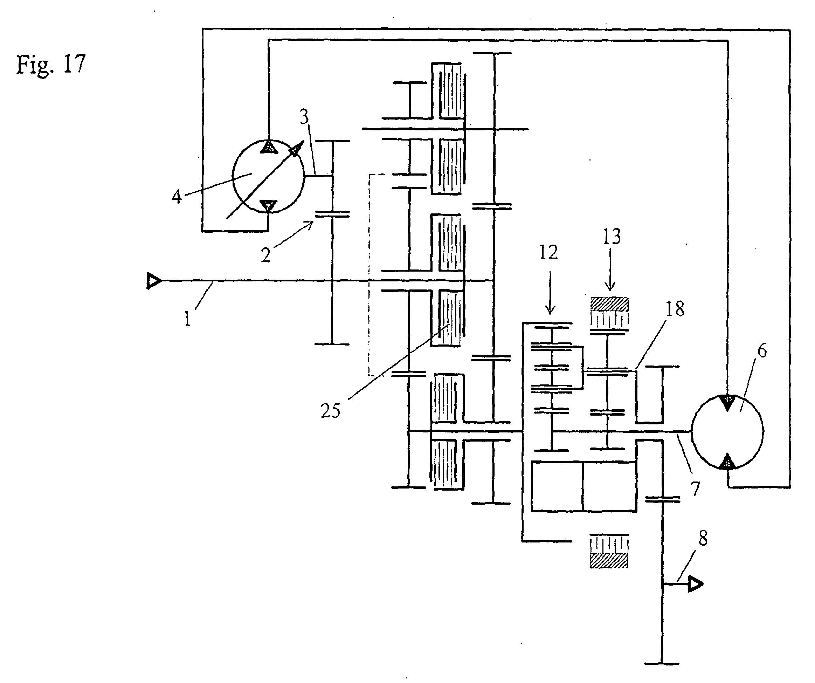

Für Anwendungsfälle bei denen der zur Verfügung stehende Bauraum dennoch ein Hindernis darstellen sollte, ist es auch denkbar, den Variator als kompakte Baueinheit 5 mit parallel angeordneter Verstellpumpe 4 und Hydromotor 6 in U- oder in Z-Anordnung gemäß den **Figuren 6** **und** **16** oder aus getrennten Einheiten in aufgelöster Bauweise gemäß den **Figuren 7** **und** **17** auszuführen. Diese Varianten stellen ebenfalls kurze Bauformen dar. Es ist aber auch denkbar, diese beiden Varianten in langer Bauform auszuführen, je nachdem wie der zur Verfügung stehende Bauraum optimal nutzbar ist. Der Einfachheit halber werden diese zusätzlichen Varianten jedoch nicht gesondert dargestellt.

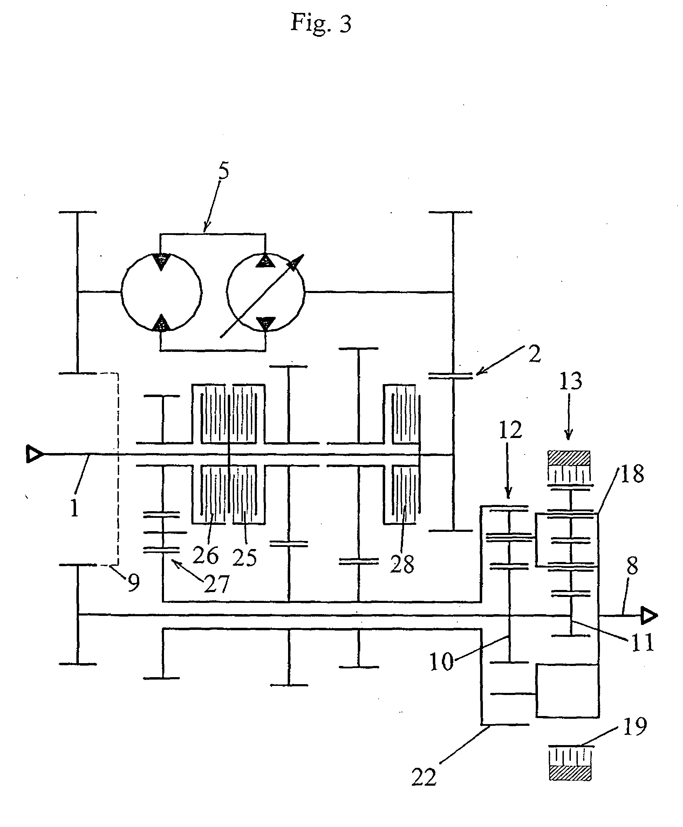

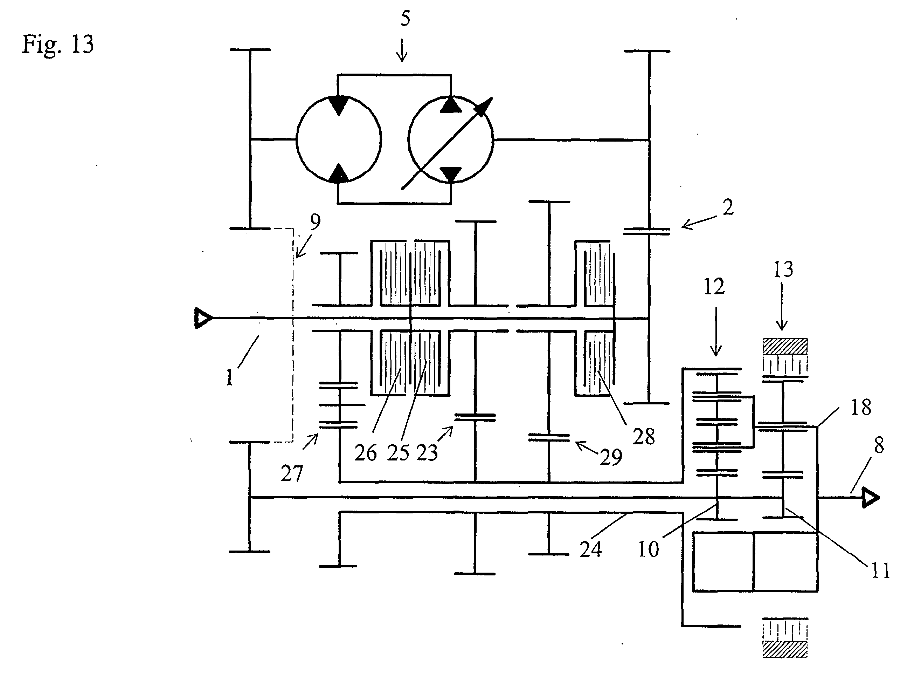

Für den Fall einer Erweiterung der Getriebespreizung können zusätzliche Übersetzungsstufen zwischen der Getriebeeingangswelle 1 und dem Hohlrad 22 vorgesehen werden, wie in den **Figuren 3** **und** **13** angedeutet. Hier ist eine Variante mit einem Rückwärtsgang und zwei Vorwärtsgängen dargestellt. Durch die zusätzliche Übersetzungsstufe kann die Getriebespreizung erhöht werden, die Umschaltung vom ersten Vorwärtsgang in den zweiten Vorwärtsgang erfolgt hier jedoch über eine schleifende Kupplung, weil in der dargestellten Getriebeausführung im Umschaltpunkt in den Kupplungen 25 und 28 keine Synchrondrehzahl erreicht werden kann.

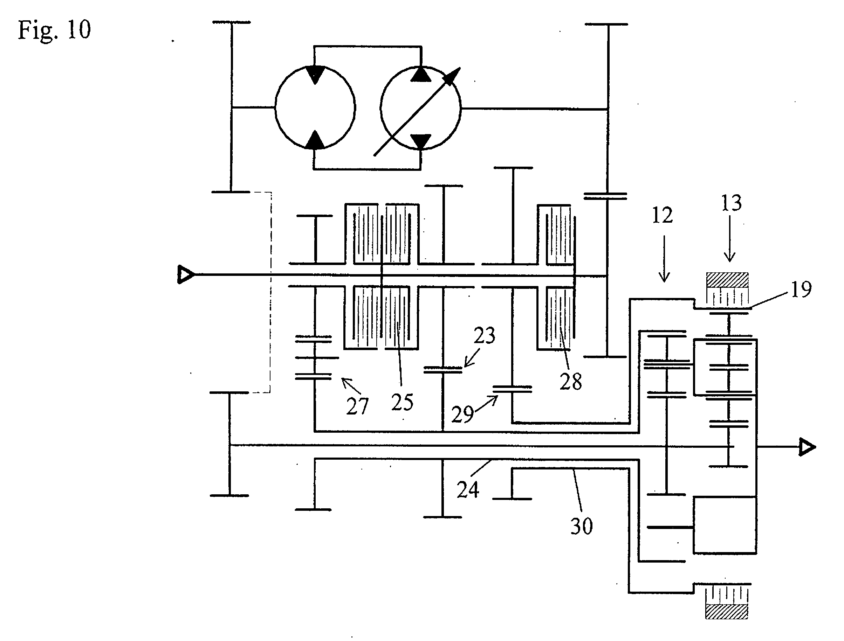

Alternativ zu den in den **Figuren 3** **und** **13** dargestellten Getriebeausführungen sind in den **Figuren 10****,** **20** **und** **21** Getriebeausführungen gezeigt, bei welchen eine Umschaltung vom ersten leistungsverzweigten Bereich in den zweiten leistungsverzweigten Bereich bei Synchrondrehzahl erfolgt. Infolge der gewählten Übersetzungen und der Kopplung des Hohlrades 19 über die Hohlwelle 30 und die Stirnradstufe 29 wird an der Kupplung 28 Synchrondrehzahl bei ausreichend hoher Drehzahl am Planetenträger 18 bzw. an den Sonnenrädern 10 und 11 erreicht. Dadurch kann die Umschaltung vom ersten in den zweiten leistungsverzweigten Bereich und die Rückschaltung vom zweiten in den ersten leistungsverzweigten Bereich durch überlappendes Schließen der Kupplungen 25 und 28 bei Synchrondrehzahl erfolgen.

Beim Rückwärtsfahren ist über die Kupplung 26 aus den Getriebeausführungen gemäß **Figuren 2****,** **3****,** **5****,** **12****,** **13** **und** **15** ein Wechsel vom reinen Variatorabtrieb zum mechanischen Abtrieb im Synchronpunkt mit Hohlrad 22 vorgesehen.

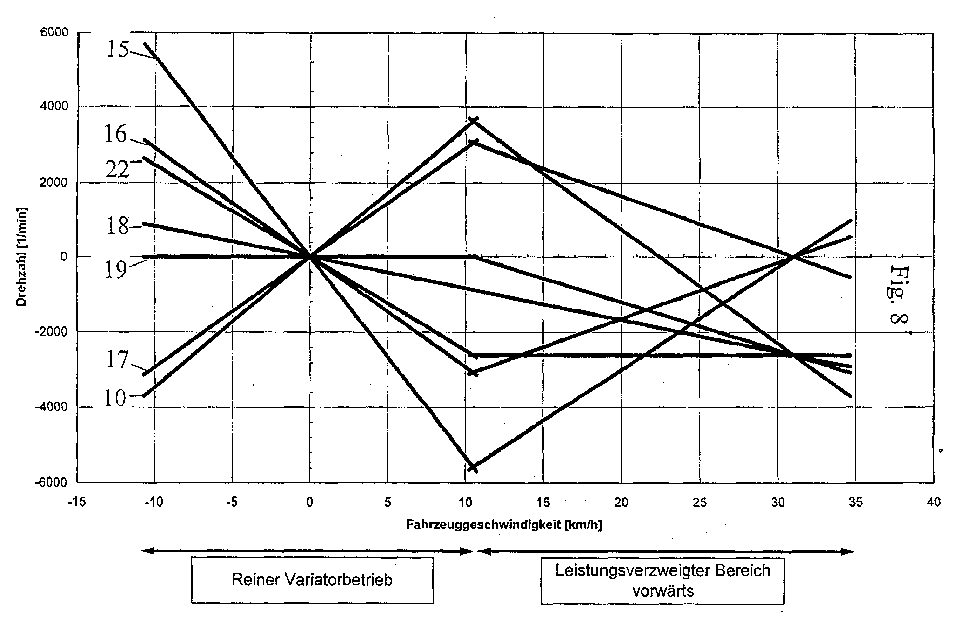

In der **Fig. 8** ist ein Drehzahldiagramm der einzelnen Komponenten des Getriebes in Abhängigkeit der Fahrzeuggeschwindigkeit nach den Getriebeschemen der **Figuren 1 und 4** dargestellt. Die Bezugsziffern der **Fig. 8** entsprechen dabei den Bezugsziffern der Figuren **1** **und** **4**.

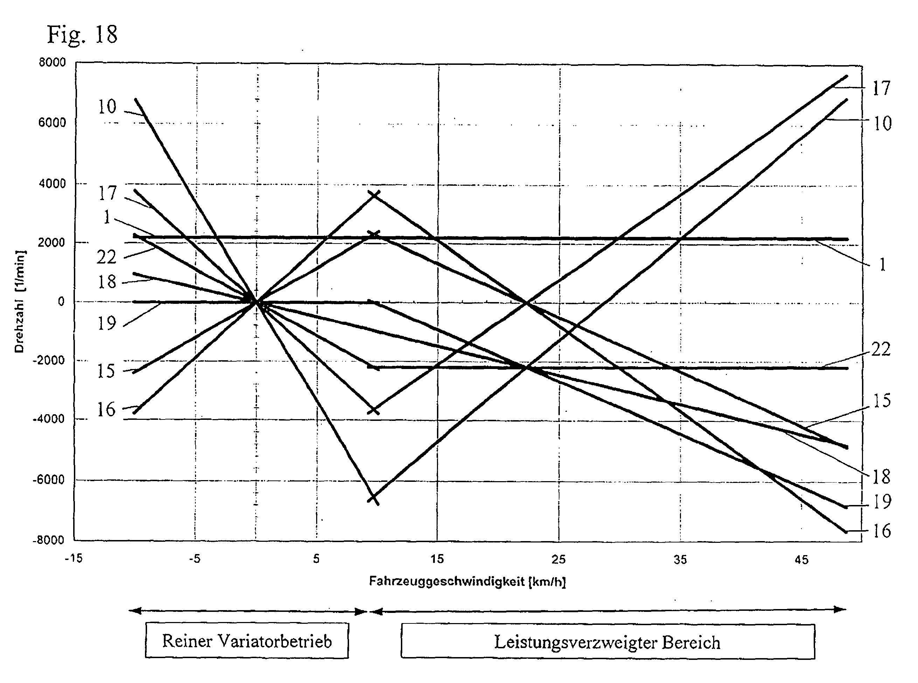

In **Fig. 18** ist ein Drehzahldiagramm der einzelnen Komponenten des Getriebes in Abhängigkeit der Fahrzeuggeschwindigkeit nach den Getriebeschemen der **Figuren 11** **und** **14** dargestellt. Die Bezugsziffern der **Fig. 18** entsprechen dabei den Bezugsziffern der **Figuren 11** **und** **14****.**

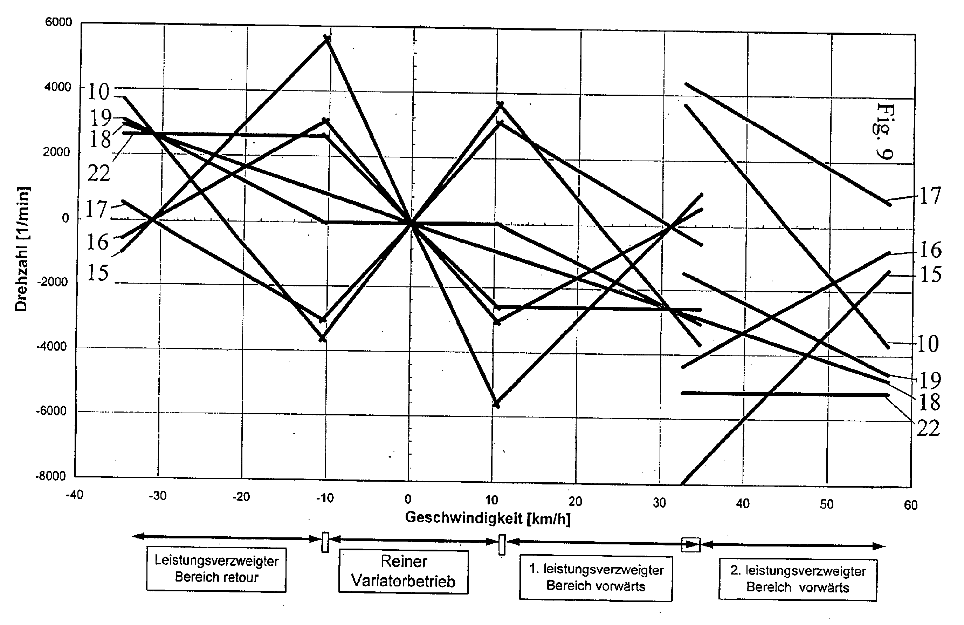

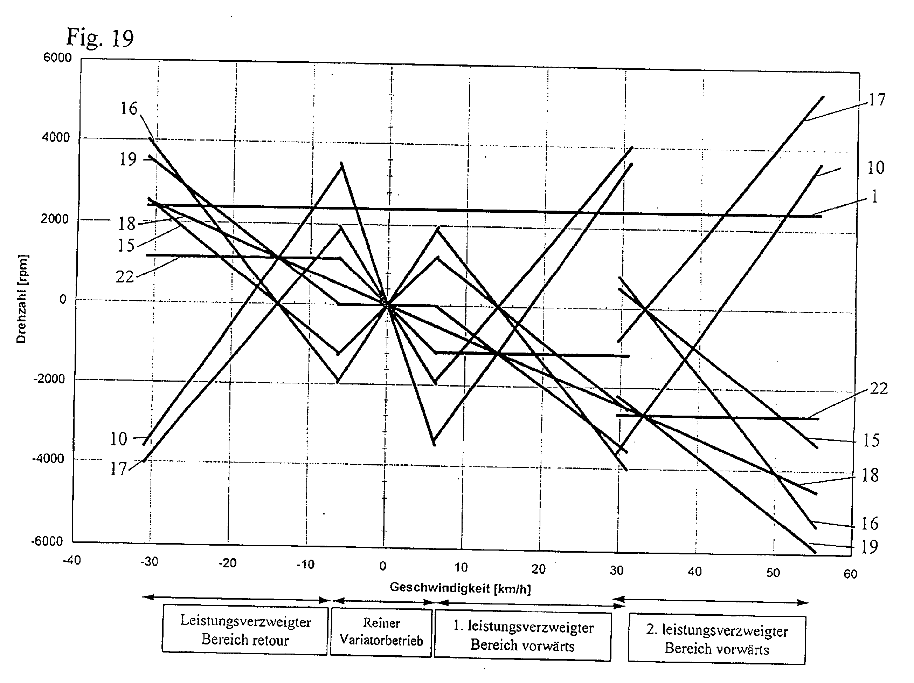

In den **Figuren 9** **und** **19** sind die Drehzahldiagramme der einzelnen Komponenten der Getriebe in Abhängigkeit der Fahrzeuggeschwindigkeit nach den Getriebeschemen der **Figuren 3** **und** **13** dargestellt. Die Bezugsziffern der **Fig. 9** entsprechen dabei den Bezugsziffern der **Fig. 3****,** die Bezugsziffern der **Fig. 19** entsprechen dabei den Bezugsziffern der **Fig. 13**.

Den Diagrammen ist zu entnehmen, dass der Antriebswechsel von Hohlrad 22 vom Variatorantrieb zum mechanischen Antrieb über die Kupplung 25 und die Stirnradstufe 23 bzw. über die Kupplung 26 und die Umkehrstirnradstufe 27 jeweils bei Synchrondrehzahl erfolgt. Die Umschaltungen im Stufenlosgetriebe werden durch überlappendes Schließen der Kupplungen 25 bzw. 26 ohne Zugkraftunterbrechung erreicht. Die Kupplungen 25 und 26 können sowohl als Lamellenkupplungen, als auch aus formschlüssigen Übertragungselementen, etwa Klauenkupplungen ausgeführt sein. Es muss jedoch gewährleistet sein, dass während des Umschaltvorganges beide beteiligte Kupplungen Drehmoment übertragen können und die Kupplungen auch unter Last geöffnet werden können.

Die Ausführungsbeispiele entsprechend den Drehzahldiagrammen der **Figuren 8****,** **9** **und** **18** zeigen Bereiche reiner Leistungsübertragung über die Variatoreinheit 5 in einem Geschwindigkeitsfenster von etwa -10 km/h bis etwa +10 km/h. Im Beispiel entsprechend dem Drehzahldiagramm nach **Fig. 9** liegt dieser Geschwindigkeitsbereich zwischen -7 km/h und +7 km/h bei jeweils angenommener maximaler Eingangsdrehzahl.

In den **Figuren 11 bis 17****,** sowie **20 und 21** sind Ausführungsvarianten des Getriebes gezeigt, in welchen die Anordnung der Planetensätze gegenüber den **Figuren 1 bis 7 und 10** gezeigten Varianten umgekehrt ist. Der rein hydrostatische Fahrantrieb erfolgt in diesen Varianten über den direkten Planetenantrieb, in den leistungsverzweigten Bereichen erfolgt die Leistungsübertragung über den Umkehrplanetensatz. Die Funktionalität ist in den beiden gezeigten Ausführungsformen gleich.

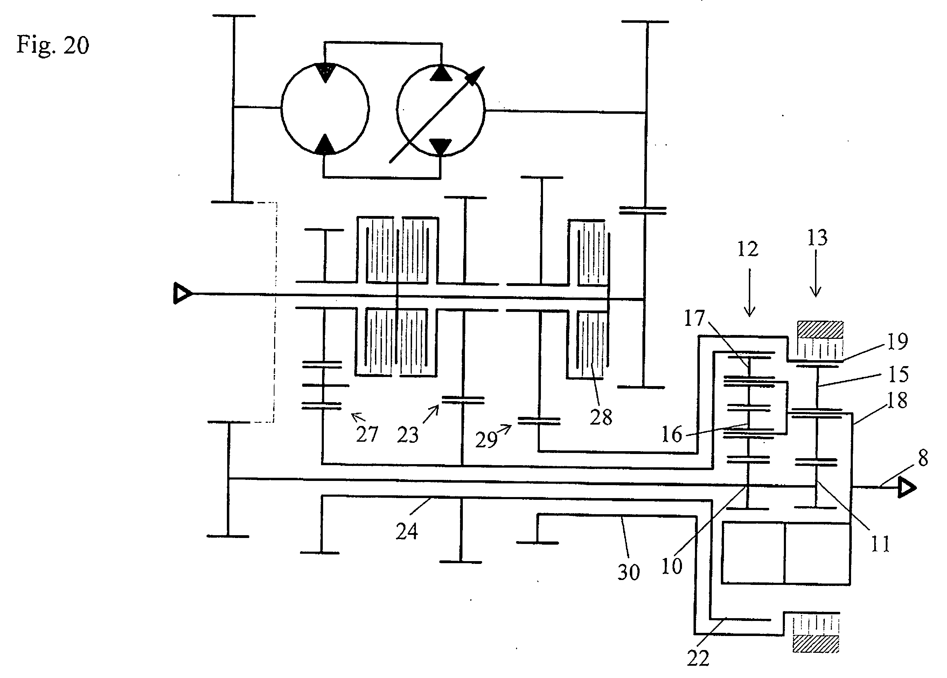

In den **Fig. 10** **und** **20** sind Ausführungsvarianten gezeigt, welche einen stufenlosen und unterbrechungsfreien Antrieb über den gesamten Übersetzungsbereich ermöglichen. Durch die Koppelung des Hohlrades 19 über die Hohlwelle 30 und die Stirnradstufe 29 wird bei entsprechender Wahl der Übersetzungen Synchrondrehzahl an der Kupplung 28 bei hoher Abtriebsdrehzahl im ersten leistungsverzweigten Bereich erreicht und die Umschaltung vom ersten in den zweiten leistungsverzweigten Bereich kann analog zur Umschaltung vom reinen Variatorantrieb in die angrenzenden leistungsverzweigten Bereiche bei Synchrondrehzahl erfolgen.

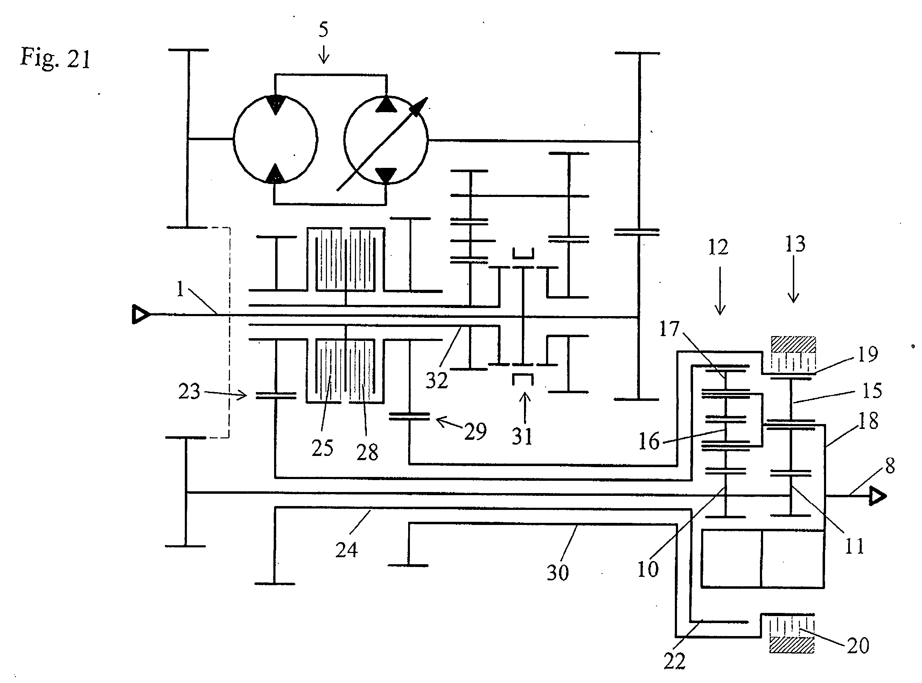

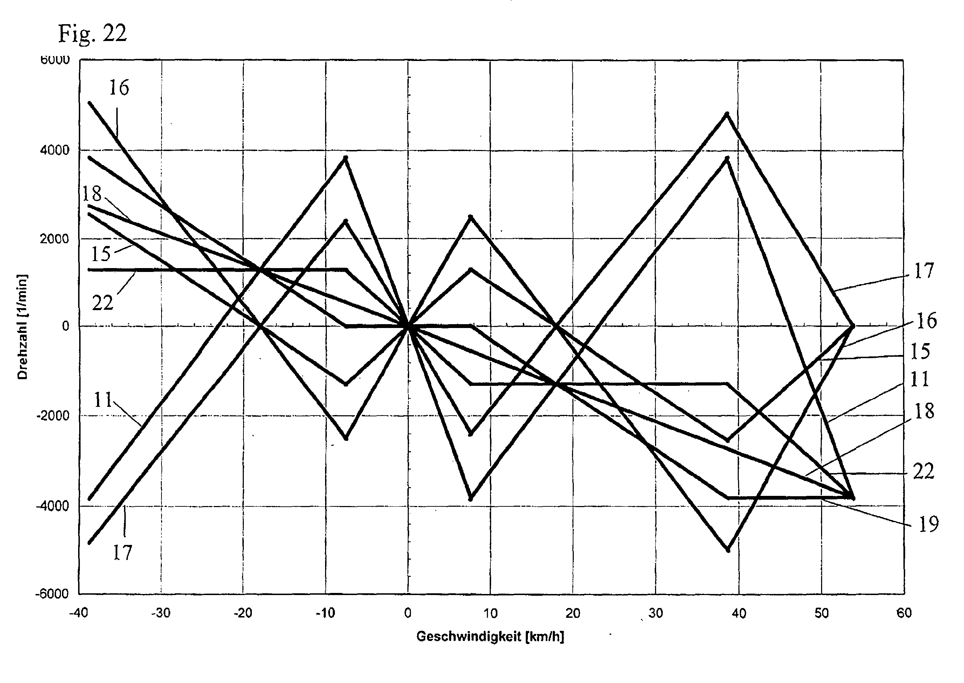

In **Fig. 21** zeigt eine Erweiterung gegenüber der in **Fig. 20** dargestellten Ausführung in Form der Umkehrstufe 31, mit welcher die Drehrichtung der Welle 32 über eine Synchronisiereinheit beeinflusst werden kann. Die Umschaltung der Drehrichtung erfolgt bei geöffneten Kupplungen 25 und 28 wenn das Getriebe in Neutralstellung geschaltet ist oder wenn die Kupplung 20 geschlossen ist und der Antrieb nur über den Variator 5 erfolgt. Die Drehrichtung der Welle 32 wird über eine Steuereinheit entsprechend der gewünschten Fahrtrichtung angepasst. In **Fig. 22** sind beispielhaft die Drehzahlen der wesentlichen Getriebekomponenten bei Ausführung des Getriebes entsprechend **Fig. 21** gezeigt. Die Bezugsziffern der **Fig. 22** entsprechen dabei den Bezugsziffern der **Fig. 21**.

Die mit dieser Erfindung hauptsächlich erzielbaren Vorteile sind:
- Im Anfahrbereich bzw. im unteren Geschwindigkeitsbereich wird das Fahrzeug nur über den Variator 5 angetrieben. Damit werden alle funktionellen Vorteile hydrostatischer, elektrischer oder artverwandter Variatorsysteme, welche eine stufenlose Anpassung der Abtriebsdrehzahl in beiden Drehrichtungen ermöglichen, nutzbar.
- Es kann eine hohe Spreizung im Summierplanetengetriebe 12 in den leistungsverzweigten Bereichen erreicht werden, wodurch eine geringere Anzahl von mechanischen Übersetzungsstufen erforderlich ist als dies bei Verwendung von nur einem Summierplanetensatz nötig wäre.
- Es kann eine hohe Übersetzung im Summierplanetengetriebe 13 erreicht werden, wodurch eine hohe Zugkraft bereits bei klein dimensionierten Variatoren erreicht werden kann.
- Der Getriebeaufbau ist einfacher und damit kostengünstiger herstellbar als bei vergleichbaren Getrieben des Standes der Technik.
- Der rein hydrostatische bzw. elektrische Betrieb bei geringen Geschwindigkeiten ermöglicht ein weiches Anfahren, ein Fahrtrichtungswechsel und ein Betrieb des Fahrzeuges bei Kriechgeschwindigkeiten ist ohne schleifende Kupplungen ermöglicht.
- Der Verbrennungsmotor kann in günstigen Kennfeldern betrieben werden durch die stufenlose Anpassung der Getriebeübersetzung.
- Es wird ein guter Gesamtwirkungsgrad erreicht durch eine geringe Leistungsübertragung über den Variator 5 beim Betrieb in den leistungsverzweigten Bereichen.
- In den Ausführungen nach den **Figuren 1** **und** **4** ist kein mechanischer Rückwärtsgang erforderlich, da die Drehrichtungsumkehr der Abtriebswelle 8 rein über den Variator 5 erfolgen kann. Dies gilt analog für Ausführungen mit zwei, drei oder mehr Vorwärtsgängen.
- In den Ausführungsformen nach den **Figuren 10****,** **20** **und** **21** wird erreicht, dass alle Umschaltungen bei Synchrondrehzahlen durchgeführt werden können.

## Patentansprüche

1. Überlagerungsgetriebe mit hydrostatisch-mechanischer oder elektrisch-mechanischer Leistungsverzweigung für den Einsatz in Räder aufweisenden Fahrzeugen und Arbeitsmaschinen. wie Kommunalfahrzeuge, Handlinggeräten wie Telehandler oder Gabelstapler, Radlader, Traktoren und vergleichbare Vorrichtungen, in welchen eine stufenlose Anpassung der Getriebeübersetzung unabhängig von der Drehzahl des Antriebsmotors gewünscht ist, mit einer Brennkraftmaschine, die eine Eingangswelle (1) eines Überlagerungsgetriebes antreibt, wobei das Überlagerungsgetriebe eine Steuerungseinrichtung in der Form eines Variators (5) aufweist, mit dem die Drehrichtung einer Abtriebswelle (8) zu den Rädern veränderbar und mit dem die Drehzahl der Abtriebswelle (8) stufenlos beeinflussbar ist, wobei die Eingangswelle (1) des Überlagerungsgetriebes mit der Eingangswelle (3) des Variators (5), umfassend eine eine Variatorabtriebswelle (7) aufweisende Verstelleinrichtung, verbunden ist, und wobei die Variatorabtriebswelle (7) entweder über eine Stirnradstufe (9) oder direkt mit Sonnenrädern (10 und 11) von parallel zueinander angeordneten Summierplanetengetrieben (12 und 13) verbunden ist, wobei der Abtrieb in allen Fahrgeschwindigkeiten und allen Fahrbereichen über mindestens einen als Planetenträger für alle Planetenräder (15, 16 und 17) ausgebildeten Steg (18) erfolgt, welcher fest mit der Abtriebswelle (8) des Überlagerungsgetriebes verbunden ist, **dadurch gekennzeichnet, dass** die Eingangswelle (1) des Überlagerungsgetriebes über eine Stirnradstufe (2) mit der Eingangswelle (3) des Variators (5) verbunden ist, und dass der mechanische Leistungspfad zwei Stirnradstufen (23, 27) und zwei Kupplungen (25, 26) umfasst, und dass der Abtrieb abhängig von einer Fahrgeschwindigkeit entweder nur über den Variator (5) oder über leistungsverzweigte Bereiche erfolgt, wobei die Übersetzungen in den Planetengetrieben (12 und 13) so gewählt sind, dass die Umschaltung von Variator-Antrieb in angrenzende leistungsverzweigte Bereiche unter Ausnutzung von Drehzahlgrenzen des Variators ohne Zugkraftunterbrechung in Synchronpunkten erfolgt.

2. Überlagerungsgetriebe nach Anspruch 1, **dadurch gekennzeichnet, dass** Kupplungen (25, 26) für den zugkraftunterbrechungsfreien Übergang vom Abtrieb über den Variator (5) bei fixierter Kupplung bzw. Bremse (20) und Nutzung der Planetenräder (16 und 17) zum leistungsverzweigten Abtrieb von der Eingangswelle (1) über ein zweites Hohlrad (22) unter Nutzung der Planetenräder (15) bei leistungsverzweigtem Abtrieb zum Steg (18) und zur Abtriebswelle (8) dient.

3. Überlagerungsgetriebe nach Anspruch 1, **dadurch gekennzeichnet, dass** Kupplungen (25, 26) für den zugkraftunterbrechungsfreien Übergang vom Abtrieb über den Variator (5) bei fixierter Kupplung bzw. Bremse (20) und Nutzung der Planetenräder (15) zum leistungsverzweigten Abtrieb von der Eingangswelle (1) über ein zweites Hohlrad (22) unter Nutzung der Planetenräder (16 und 17) bei leistungsverzweigtem Abtrieb zum Steg (18) und zur Abtriebswelle (8) dient.

4. Überlagerungsgetriebe nach Anspruch 1, 2 oder 3, **dadurch gekennzeichnet, dass** der Variator (5) entweder als Hydrostateinheit, bestehend aus einer Verstellpumpe (4) und einem Hydromotor (6), als Konstantmotor, oder als Hydrostateinheit, umfassend eine Verstellpumpe (4) und einen Verstellmotor (6), in Form von Axialkolbenmaschinen oder Flügelzelleneinheiten oder als elektrischer Variator in Form einer Kombination aus Generator und Elektromotor mit zugeordneten Invertern, gegebenenfalls unter Einbeziehung von hydraulischen oder elektrischen Speichersystemen, ausgebildet ist.

5. Überlagerungsgetriebe nach Anspruch 1, 2 oder 4, **dadurch gekennzeichnet, dass** die Summierplanetengetriebe (12 und 13) je ein Sonnenrad (10 und 11) besitzen, welche untereinander über eine Welle (14) drehfest verbunden sind, wobei Sonnenrad (10) mit den Planetenrädern (15) und Sonnenrad (11) mit den Umkehrplanetenrädern (16 und 17) in Wirkverbindung steht und wobei die Planetenräder (15) mit einem zweiten Hohlrad (22) und die Planetenräder (17) mit einem ersten Hohlrad (19) kämmen und das erste Hohlrad (19) über eine Kupplung (20) oder eine Bremse am Gehäuse (21) drehfest fixierbar ist.

6. Überlagerungsgetriebe nach Anspruch 1, 3 oder 4, **dadurch gekennzeichnet, dass** die Summierplanetengetriebe (12 und 13) je ein Sonnenrad (10 und 11), welche untereinander über eine Welle (14) drehfest verbunden sind, wobei Sonnenrad (10) mit den Umkehrplanetenrädern (16 und 17) und Sonnenrad (11) mit den Planetenrädern (15) in Wirkverbindung steht und wobei die Planetenräder (15) mit einem ersten Hohlrad (19) und die Planetenräder (17) mit einem zweiten Hohlrad (22) kämmen und das erste Hohlrad (19) über eine Kupplung (20) oder eine Bremse am Gehäuse (21) drehfest fixierbar ist.

7. Überlagerungsgetriebe nach einem der Ansprüche 1 bis 6, **dadurch gekennzeichnet, dass** die Übersetzung im Planetensatz (13) größer ist als im Planetensatz (12).

8. Überlagerungsgetriebe nach einem der Ansprüche 5 oder 6 sowie einem der Ansprüche 1 bis 4 oder 7, **dadurch gekennzeichnet, dass** zur Umschaltung von einem ersten in einen zweiten leistungsverzweigten Bereich schleifende Kupplungen (25 und 28) vorgesehen sind, wobei die Änderung der Drehzahl des zweiten Hohlrades (22) durch Beeinflussung der Drehzahl des Sonnenrades (10) während des Umschaltvorganges vollkommen oder auch teilweise kompensiert wird.

9. Überlagerungsgetriebe nach Anspruch 8, **dadurch gekennzeichnet, dass** das erste Hohlrad (19) über entsprechende Übertragungselemente mit einer Kupplung (28) verbunden ist, und die Übersetzungen an den Stirnradstufen (23 und 29) so ausgeführt sind, dass die Umschaltung vom ersten in den zweiten leistungsverzweigten Bereich bei Synchrondrehzahl an der Kupplung (28) erfolgt.

10. Überlagerungsgetriebe nach einem der Ansprüche 8 oder 9, **dadurch gekennzeichnet, dass** eine in zwei Drehrichtungen drehbare Welle (32) vorgesehen ist, und dass in beiden Drehrichtungen über den gesamten Übersetzungsbereich ein stufenloser und unterbrechungsfreier Antrieb über eine Umkehrstufe (31) erfolgt, mit welcher die Drehrichtung der Welle (32) über eine Synchronisiereinheit gesteuert wird und die Umschaltung der Drehrichtung bei geöffneten Kupplungen (25 und 28) erfolgt wenn das Getriebe auf neutral geschaltet ist oder wenn die Kupplung (20) geschlossen ist und der Antrieb nur über den Variator (5) erfolgt.

11. Überlagerungsgetriebe nach einem der Ansprüche 1 bis 10, **dadurch gekennzeichnet, dass** der Variator (5) als kompakte Einheit in gestreckter Ausführung mit back-to-back angeordneter Verstellpumpe (4) und Hydromotor (6) oder als kompakte Einheit mit nebeneinander angeordneter Verstellpumpe (4) und Hydromotor (6) in Z- oder U-Anordnung oder als getrennte Hydrostateinheiten in aufgelöster Bauweise ausgebildet ist.

12. Überlagerungsgetriebe nach Anspruch 1, **dadurch gekennzeichnet, dass** Verstelleinrichtung als Verstellpumpe (4) in Verbindung mit einem Hydro- oder Elektromotor (6) ausgebildet ist.

13. Überlagerungsgetriebe nach Anspruch 1, **dadurch gekennzeichnet, dass** der Abtrieb über zwei getrennte, jedoch drehfest miteinander gekoppelte Stege erfolgt, die einen Planetenträger für alle Planetenräder (15, 16 und 17) bilden.

## Claims

1. A superposition transmission with hydrostatic-mechanical or electric-mechanical power splitting for the use in vehicles and work machines with wheels such as municipal vehicles, handling devices such as telehandlers or forklifts, wheel loaders, tractors and comparable apparatuses, in which a continuously variable adjustment of the gear ratio is desired independent of the speed of the drive engine, comprising an internal combustion engine which drives an input shaft (1) of a superposition transmission, with the superposition transmission comprising a control device in the form of a variator (5), with which the direction of rotation of the output shaft (8) to the wheels can be changed and with which the speed of the output shaft (8) can be influenced in a continuously variable manner, with the input shaft (1) of the superposition transmission being connected with the input shaft (3) of a variator (5), comprising an adjusting device having a variator output shaft (7), and with the variator output shaft (7) being connected either via a spur-gear stage (9) or directly with the sun gears (10 and 11) of summing planetary gears (12 and 13) arranged parallel with respect to one another, with the output occurring in all travelling speeds and all travelling ranges via at least one carrier (18) arranged as a planet carrier for all planetary wheels (15, 16 and 17), which carrier is connected rigidly with the output shaft (8) of the superposition transmission, **characterized in that** the input shaft (1) of the superposition gear is connected via a spur gear stage (2) with the input shaft (3) of the variator (5), and that the mechanical power path comprises two spur gear stages (23, 27) and two clutches (25, 26), and that the output occurs depending on a travelling speed either via only the variator 5 or power-split areas, with the gear ratios in the planetary gears (12 and 13) being chosen in such a way that the changeover from variator drive to adjacent power-split areas occurs by utilizing speed limits of the variator without any interruption of tractive force in synchronous points.

2. A superposition transmission according to claim 1, **characterized in that** the clutches (25, 26) are used for the transfer free from interruption of tractive force from the output via the variator (5) with fixed clutch or brake (20) and utilization of the planet wheels (16 and 17) for power-split output from the input shaft (1) via a second ring gear (22) by utilizing the planet wheels (15) in the case of power-split output to the carrier (18) and to the output shaft (8).

3. A superposition transmission according to claim 1, **characterized in that** the clutches (25, 26) are used for the transfer free from interruption of tractive force from the output via the variator (5) with fixed clutch or brake (20) and utilization of the planet wheels (16 and 17) for power-split output from the input shaft (1) via a second ring gear (22) by utilizing the planet wheels (16 and 17) in the case of power-split output to the carrier (18) and to the output shaft (8).

4. A superposition transmission according to claim 1, 2 or 3, **characterized in that** the variator (5) is arranged either as a hydrostatic unit, consisting of a variable displacement pump (4) and a hydraulic motor (6) as a constant motor, or as a hydrostatic unit comprising a variable displacement pump (4) and a variable displacement motor (6) in the form of axial piston machines or vane units, or as an electric variator in the form of a combination of a generator and electric motor with associated inverters, optionally by including hydraulic or electric storage systems.

5. A superposition transmission according to claim 1, 2 or 4, **characterized in that** the summing planetary gears (12 and 13) respectively comprise a sun gear (10 and 11) which are connected among each other in a torque-proof manner via a shaft (14), with the sun gear (10) being in operative connection with the planetary gears (15) and the sun gear (11) with the reversing planetary gears (16 and 17), and with the planetary gears (15) meshing with a second ring gear (22) and the planetary gears (17) with the first ring gear (19), and the first ring gear (19) being fixable in a torque-proof manner to the housing (21) via a clutch (20) or a brake.

6. A superposition transmission according to claim 1, 3 or 4, **characterized in that** the summing planetary gears (12 and 13) respectively comprise a sun gear (10 and 11) which are connected among each other in a torque-proof manner via a shaft (14), with the sun gear (10) being in operative connection with the reversing planetary gears (16 and 17) and the sun gear (11) with the planetary gears (15), and with the planetary gears (15) meshing with a first ring gear (19) and the planetary gears (17) with a second ring gear (22), and the first ring gear (19) being fixable in a torque-proof manner to the housing (21) via a clutch (20) or a brake.

7. A superposition transmission according to one of the claims 1 to 6, **characterized in that** the gear ratio in the planetary gear set (13) is larger than in the planetary gear set (12).

8. A superposition transmission according to one of the claims 5 or 6 and one of the claims 1 to 4 or 7, **characterized in that** slipping clutches (25 and 28) are provided for the changeover from a first to a second power-split area, with the change in the speed of the second ring gear (22) being compensated completely or also partially by influencing the speed of the sun gear (10) during the changeover process.

9. A superposition transmission according to claim 8, **characterized in that** the first ring gear (19) is connected with a clutch (28) via respective transfer elements, and the gear ratios on the spur-gear stages (23 and 29) are arranged in such a way that the changeover from the first power-split area to the second power-split area occurs at synchronous speed in clutch (28).

10. A superposition transmission according to one of the claims 8 or 9, **characterized in that** a shaft (32) is provided which is rotatable in both rotational directions, and that a continuously variable and interruption-free drive occurs via a reversing stage (31) in both driving directions over the entire gear ratio range, with which the direction of rotation of the shaft (32) is controlled via a synchronization unit and the changeover in the direction of rotation occurs when the transmission is shifted to neutral when the clutches (25 and 28) are opened, or when the clutch (20) is closed and the drive occurs only via the variator (5).

11. A superposition transmission according to one of the claims 1 to 10, **characterized in that** the variator (5) is arranged as a compact unit in stretched configuration with a variable displacement pump (4) and hydraulic motor (6) arranged back-to-back, or as a compact unit with adjacently arranged variable displacement pump (4) and hydraulic motor (6) in the arrangement of Z or U, or as separate hydrostatic units in resolved construction.

12. A superposition transmission according to claim 1, **characterized in that** the adjusting device is arranged as a variable displacement pump (4) in conjunction with a hydraulic or electric motor (6).

13. A superposition transmission according to claim 1, **characterized in that** the drive occurs via two separate carriers which are coupled with each other in a torsion-proof manner and which form a planet carrier for all planetary gears (15, 16 and 17).

## Revendications

1. Différentiel à répartition de puissance mécano-hydrostatique ou électromécanique destiné à être utilisé dans des véhicules et engins de travail présentant des roues, tels que des véhicules communaux, des engins de manutention tels que des gerbeurs télescopiques ou des chariots élévateurs, des tracteurs et dispositifs similaires, dans lesquels on souhaite que l'adaptation en continu du rapport de multiplication de la transmission se fasse indépendamment de la vitesse de rotation du moteur, avec un moteur à combustion interne qui entraîne un arbre d'entrée (1) d'un différentiel, lequel différentiel présente un dispositif de commande prenant la forme d'un variateur (5), avec lequel le sens de rotation d'un arbre de sortie (8) vers les roues peut être modifié et avec lequel la vitesse de rotation de l'arbre de sortie (8) peut être influencée en continu, dans lequel l'arbre d'entrée (1) du différentiel est relié à l'arbre d'entrée (3) du variateur (5), comprenant un dispositif de réglage qui présente l'arbre de sortie du variateur (7), et dans lequel l'arbre de sortie du variateur (7) est relié soit par l'intermédiaire d'un étage de roues droites (9), soit directement à des roues solaires (10 et 11) d'engrenage épicycloïdaux additionneurs (12 et 13) disposés parallèlement l'un à l'autre, la sortie s'effectuant à toutes les vitesses de marche et dans toutes les plages de propulsion par l'intermédiaire d'un moins un porte-satellites (18) conçu comme une cage pour toutes les roues planétaires (15, 16 et 17), qui est reliée à demeure avec l'arbre de sortie (8) du différentiel, **caractérisé en ce que** l'arbre d'entrée (1) du différentiel est relié par l'intermédiaire d'un étage de roues droites (2) à l'arbre d'entrée (3) du variateur (5) et **en ce que** le trajet de puissance mécanique comprend deux étages de roues droites (23, 27) et deux embrayages (25, 26), et **en ce que** la sortie s'effectue, en fonction d'une vitesse de marche, soit seulement par le variateur (5), soit par des plages de répartition de puissance, les rapports de multiplication dans les engrenage épicycloïdaux (12 et 13) étant choisis de telle façon que le passage du mode de variateur aux plages de répartition de puissance limitrophes s'effectue en utilisant des limites de vitesse de rotation du variateur sans coupure de l'effort de traction à des points synchrones.

2. Différentiel selon la revendication 1, **caractérisé en ce que** des embrayages (25, 26) servent à la transmission sans coupure de l'effort de traction de la sortie par le variateur (5) avec l'embrayage ou le frein (20) fixé en en utilisant les roues planétaires (16 et 17) à la sortie à répartition de puissance de l'arbre d'entrée (1) par une deuxième couronne (22) en utilisant les roues planétaires (15) en sortie à répartition de puissance vers le porte-satellites (18) et vers l'arbre de sortie (8).

3. Différentiel selon la revendication 1, **caractérisé en ce que** des embrayages (25, 26) servent à la transmission sans coupure de l'effort de traction de la sortie par le variateur (5) avec l'embrayage ou le frein (20) fixé en en utilisant les roues planétaires (15) à la sortie à répartition de puissance de l'arbre d'entrée (1) par une deuxième couronne (22) en utilisant les roues planétaires (16 et 17) en sortie à répartition de puissance vers le porte-satellites (18) et vers l'arbre de sortie (8).

4. Différentiel selon la revendication 1, 2 ou 3, **caractérisé en ce que** le variateur (5) est conformé soit comme une unité hydrostatique composée d'une pompe variable (4) et d'un moteur hydraulique (6) formant un moteur constant, soit comme une unité hydrostatique comprenant une pompe variable (4) et un moteur variable (6) sous la forme de moteurs à piston axial ou à aubes cellulaires, ou d'un variateur électrique sous la forme d'une combinaison de générateur et de moteur électrique avec des inverseurs associés, utilisant éventuellement des systèmes d'accumulation hydrauliques ou électriques.

5. Différentiel selon la revendication 1, 2 ou 4, **caractérisé en ce que** chaque les engrenage épicycloïdaux additionneur (12 et 13) possèdent chacun une roue solaire (10 et 11) qui est reliée à l'autre par un arbre (14) de manière solidaire en rotation, la roue solaire (10) étant en liaison active avec les roues planétaires (15) et la roue solaire (11) avec les roues planétaires inversées (16 et 17) et les roues planétaires (15) pouvant engrenant avec une deuxième couronne (22) et les roues planétaires (17) avec une première couronne (19) et la première couronne (19) pouvant être fixée en rotation par un embrayage (20) ou un frein sur le boîtier (21).

6. Différentiel selon la revendication 1, 3 ou 4, **caractérisé en ce que** les engrenage épicycloïdaux additionneur (12 et 13) possèdent chacun une roue solaire (10 et 11) qui est reliée à l'autre par un arbre (14) de manière solidaire en rotation, la roue solaire (10) étant en liaison active avec les roues de l'engrenage épicycloïdal inversé (16 et 17) et la roue solaire (11) avec les roues planétaires (15) et les roues planétaires (15) engrenant avec une première couronne (19) et les roues planétaires (17) avec une deuxième couronne (22) et la première couronne (19) peut être fixée en rotation par un embrayage (20) ou un frein sur le boîtier (21).

7. Différentiel selon l'une des revendications 1 à 6, **caractérisé en ce que** le rapport de multiplication est plus grand dans l'engrenage épicycloïdal (13) que dans l'engrenage épicycloïdal (12).

8. Différentiel selon l'une des revendications 5 ou 6 et l'une des revendications 1 à 4 ou 7, **caractérisé en ce que** pour passer d'une première plage de répartition de puissance à une deuxième, il est prévu des embrayages à patinage (25 et 28), le changement de la vitesse de rotation de la deuxième couronne (22) étant entièrement ou partiellement compensé par l'influence sur la vitesse de rotation de la roue solaire (10) pendant l'opération de changement de rapport.

9. Différentiel selon la revendication 8, **caractérisé en ce que** la première couronne (19) est reliée par des éléments de transmission correspondants à un embrayage (28) et les rapports de transmission des étages de roues droites (23 et 29) sont réalisés de telle façon que le passage d'une première plage de répartition de puissance à une deuxième s'effectue à une vitesse de rotation synchrone de l'embrayage (28).

10. Différentiel selon l'une des revendications 8 ou 9, **caractérisé en ce qu'**il est prévu un arbre (32) pouvant tourner dans deux sens de rotation, et **en ce que** dans les deux sens de rotation, un entraînement en continu et sans interruption est réalisé dans toute la plage de rapports de multiplication par l'intermédiaire d'un étage d'inversion (31) avec lequel le sens de rotation de l'arbre (32) est contrôlé par une unité de synchronisation et le changement de sens de rotation se produit avec les embrayages (25 et 28) ouverts quand la transmission est au point neutre ou quand l'embrayage (20) est fermé et l'entraînement ne passe que par le variateur (5).

11. Différentiel selon l'une des revendications 1 à 10, **caractérisé en ce que** le variateur (5) est conçu comme une unité compacte en construction allongée avec une pompe variable (4) et un moteur hydraulique (6) disposés dos à dos ou comme une unité compacte avec une pompe variable (4) et un moteur hydraulique (6) disposés côte à côte dans une disposition en Z ou en U ou comme des unités hydrostatiques séparées dans une construction répartie.

12. Différentiel selon la revendication 1, **caractérisé en ce que** le dispositif de variation est conçu comme une pompe variable (4) en relation avec un moteur hydraulique ou électrique (6).

13. Différentiel selon la revendication 1, **caractérisé en ce que** la sortie s'effectue par l'intermédiaire de deux porte-satellites séparés mais reliés entre eux de façon solidaire en rotation, qui forment une cage pour toutes les roues planétaires (15, 16 et 17).
